# EUROPÄISCHE PATENTSCHRIFT

(11) **EP 0 957 321 B1**
(45) Veröffentlichungstag und Bekanntmachung des Hinweises auf die Patenterteilung: **20.10.2004**
(21) Anmeldenummer: 99109153.9
(22) Anmeldetag: 10.05.1999
(51) Int. Cl.: F24F 6/14

(54) **Luftbefeuchtungsanlage**
Air humidification device
Dispositif d'humidification de l'air

(30) Priorität: 11.05.1998 DE 29808310 U
(43) Veröffentlichungstag der Anmeldung: 17.11.1999
(73) Patentinhaber: Nova Apparatebau GmbH, 78166 Donaueschingen (DE)
(72) Erfinder: Honer, Helmut, D-78166 Donaueschingen (DE)
(74) Vertreter: Riebling, Peter, Dr.-Ing.

(56) Entgegenhaltungen:
- EP-A- 0 251 196
- WO-A-95/10009
- DE-C- 4 229 172
- FR-A- 2 643 140

## Beschreibung

Die Erfindung betrifft eine Luftbefeuchtungsanlage nach dem Oberbegriff des Anspruchs 1.

Um Luft zu befeuchten gibt es bisher verschiedene Methoden. Eine Methode davon ist, durch axiale Kreiselgebläse mit einer ummantelten, motorisch angetriebenen Luftschraube frei im Raum aufgehängt mit Zerstäuberdüsen ausgestattet einen Luftstrom zu erzeugen, der von oben nach unten strömt und beim Vorbeiströmen an den Zerstäuberdüsen das zerstäubte Wasser mit sich wegträgt und so die an den Düsen vorbeiströmende Luft befeuchtet. Ein Nachteil dieser Form von Luftbefeuchtung ist der, daß die Feuchtigkeitsaufnahme der vorbeiströmenden Luft über die Zerstäuberdüsen in einem geringen Ausmaß erfolgt.

Eine weitere Möglichkeit der Luftbefeuchtung wird in Klimaanlagen oder Luftbefeuchtern, sogenannten Luftwäschern, eingesetzt. Dabei werden Luftbefeuchter in einem Strömungskanal für die zu befeuchtende Luft angeordnet. Die vorbeiströmende Luft wird dabei von den nebeneinander angeordneten Zerstäuberdüsen mit zerstäubtem Wasser angereichert. Auch bei dieser Art von Luftbefeuchtung ist die Aufnahme von Wasser nur in begrenztem Maße möglich.

Eine weitere Möglichkeit der Luftbefeuchtung wird anhand eines Luftstromkanals durchgeführt, indem Luftleitbleche in entsprechenden Positionen angeordnet sind, an denen ebenfalls Sprühdüsen zur Einbringung von Flüssigkeit an verschiedenen Stellen im Luftstromkanal angeordnet sind. Bei dieser Art von Luftbefeuchtung durchströmt die zu befeuchtende Luft einen Luftstromkanal, wobei die durchströmende Luft durch die Form der im Luftstromkanal angeordneten Leitbleche umgelenkt wird. Diese Leitbleche werden auch als Leitschaufeln bezeichnet, und lenken die Luft anhand ihrer Form im Luftstromkanal aus einer laminaren Strömung um. Um diese Leitbleche anbringen zu können, bedarf es eines Luftstromkanals, der durch entsprechende Begrenzungswände gebildet wird.

In diesen Luftstromkanal werden die sogenannten Leitschaufeln in dafür vorgesehenen Öffnungen eingesteckt bzw. montiert, und zwar in der Weise, daß sie die in den Wänden des Luftstromkanals vorgesehenen Öffnungen vollkommen verschließen. Durch das Durchströmen der Luft durch den Luftstromkanal wird also durch die Form der Luftleitbleche, der sogenannten Leitschaufeln ein Drall auf den durchströmenden Luftstrom bewirkt. Die in der Mitte der Leitschaufeln angeordneten Sprühdüsen bewirken die Befeuchtung der durchströmenden Luft und diese wird durch die Verwirbelung der Luftleitbleche oder sogenannten Leitschaufeln stärker mit Feuchtigkeit angereichert als in den zuvor beschriebenen Verfahren.

Nachteil bei diesen Verfahren ist, daß ein kompliziert aufgebauter Leitapparat für die durchströmende Luft verwendet werden muß, da in einer Materialwand Öffnungen angebracht sind, in denen die den Drall erzeugenden Leitschaufeln eingesetzt sind. Die Herstellung einer derartigen Konstruktion mit Einbringung von Öffnungen, in die entsprechenden Leitschaufeln eingesetzt werden, ist entsprechend aufwendig, kompliziert und teuer. Neben den hohen Herstellungskosten wirkt sich auch die Reduzierung der Stabilität dieser Anordnung negativ auf die ganze Konstruktion aus. Eine entsprechende Veröffentlichung ist unter der Nummer EP 670 986 beim Europäischen Patentamt bekannt geworden.

Mit der Patentschrift DE 42 29 172 C1 ist ebenfalls eine Vorrichtung zur Befeuchtung eines Luftstromes mit Düsen und Luftstrom-Sperrelementen bekannt geworden, bei welcher mehrere Düsen für die Wasserzerstäubung gleichmäßig über den Querschnitt des Luftströmungskanals angeordnet sind. Im Luftstrom-Sperrelement, welches stromaufwärts oder stromabwärts im Luftströmungskanal angeordnet sein kann, sind Luftdurchlaß-Öffnungen zur Führung der Luft eingebracht. Hierbei sprühen die Düsen das Wasser in Strömungsrichtung der Luft aus. Die Düsen sind im Bezug auf die Luftdurchlaß-Öffnungen des Luftstrom-Sperrelementes derart angeordnet, daß jede Düse einer Luftdurchlaß-Öffnung zugeordnet ist und etwa mittig zu ihr liegt.

Der Erfindung liegt nun die Aufgabe zugrunde, eine Luftbefeuchtungseinrichtung herzustellen, die einen höheren Wirkungsgrad mit günstigerer Durchmischung von Luft und Wasser gewährleistet und wesentlich einfacher zu fertigen ist, dabei eine größere Stabilität aufweist und zusätzlich die Fertigungskosten reduziert.

Gelöst wird diese Aufgabe anhand der Merkmale des unabhängigen Anspruchs 1.

Wesentliches Merkmal hierbei ist, daß mehrere Düsen für die Wasserzerstäubung und mehrere Prallplatten gleichmäßig über den Querschnitt des Luftströmungskanals angeordnet sind, und die Düsen das Wasser mit der Strömungsrichtung der Luft aussprühen, wobei mindestens eine Düse jeweils einer Prallplatte zugeordnet ist, und die Düsen stromabwärts zu den Prallplatten und im wesentlichen radial einwärts im Bezug auf die Mantelfläche der Prallplatte sich befinden, also im Windschatten der Prallplatte.

Bei der vorliegenden Erfindung wird ein Düsenrechen vorgestellt, der eine sehr einfache Halterung für Prallplatten aufweist. Die Prallplatten dienen zur Erzeugung von Luftwirbeln, die die hinter den Prallplatten zerstäubten Wasserpartikel auf- und mit sich fortnehmen. Die Prallplatten bewirken entgegen der zuvor beschriebenen Anordnung, in der die Luft abgelenkt wird, eine Verwirbelung der durchströmenden Luft des Luftstromkanals. D. h., durch die Prallplatten entsteht auf deren, in Luftstromrichtung gesehen abgewandten Seite, ein Unterdruck, der die Aufnahme des zerstäubten Wassers begünstigt.

Durch die Verwirbelung umströmt mehr Luft den Wasserstaub als in den bisher bekannten Anordnungen. Dadurch wird eine deutlich höhere Befeuchtung der durchströmenden Luft des Luftstromkanals erzielt. Um eine möglichst hohe Verwirbelung der durchströmenden Luft zu erzielen, ist es notwendig, scharfe Abrißkanten an den Prallplatten auszubilden. Je schärfer die Abrißkanten ausgebildet sind, desto größer sind die Verwirbelungen an der, in Strömungsrichtung gesehen, nachgeordneten Seite der Prallplatten.

Wichtig für eine effektive Luftbefeuchtung ist dabei, daß die Zerstäuberdüse im Zentrum der durch die Verwirbelung erzeugten Turbulenzen der jeweiligen Prallplatte im Luftstrom des Luftstromkanals angeordnet ist. Um die optimale Positionierung dieser Zerstäuberdüse im Turbulenzraum hinter der Prallplatte zu erreichen, wird die Prallplatte durch eine Prallplattenhalterung in Zusammenwirkung mit Stelischrauben in entsprechendem Abstand von der Düse angeordnet. Diese Anordnung ist variabel gestaltet, um die Konstruktion den Turbulenzverhältnissen unterschiedlicher Druckbereiche, sowohl des Luftstroms, wie auch des zugeführten Wassers anzupassen. Die Anpassung erfolgt dadurch, daß der Abstand zwischen der Position der Düse und der Prallplatte entsprechend vergrößert oder verkleinert wird.

Es ist bekannt, daß es bei der Umströmung eines scharfkantigen Hindernisses im Kernbereich des Nachlaufwirbels infolge des entstehenden Unterdruckes zur Rückströmung (entgegen der Hauptströmungsrichtung) bis an die Hindernis-Rückseite kommt. Erfindungsgemäß wird dieser im Anwendungsfall unerwünschte Effekt beseitigt, indem in der Prallplatte Luftdurchlaß-Öffnungen angeordnet sind.

Bei entsprechender Dimensionierung der freien Durchströmfläche und optimaler Positionierung der Zerstäuberdüse nehmen die Turbulenzen des Luftstroms, die sich konzentrisch ausbilden und auf die Mitte hin zu bewegen, den dort erzeugten Wassernebel auf und mit sich mit. Somit wird eine effektive Befeuchtung des Luftstroms im Luftstromkanal erreicht. Entsprechend des Querschnitts des Luftstromkanals werden Prallplatten mit Hauptzuleitungen und Düsenzuleitungen für die Versorgung der Düsen mit Wasser, im Querschnitt des Luftstromkanals gesehen, flächig angeordnet. Diese Anordnung kann natürlich in Strömungsrichtung gesehen mehrfach hintereinander angeordnet werden. Somit erhöht sich auch der Feuchtigkeitsgrad der durchströmenden Luft im Luftstromkanal.

Anhand der beiliegenden Zeichnung wird eine Ausführungsform der vorliegenden Erfindung beschrieben.

Es zeigen:
- Figur 1:: Einen Querschnitt eines Luftstromkanals mit darin angeordneter Befeuchtungseinrichtung;
- Figur 2:: Seitenansicht der Befeuchtungseinrichtung aus Figur 1;
- Figur 3:: einen Detailausschnitt der Befeuchtungseinrichtung aus Figur 1;
- Figur 4:: Seitenansicht des Detailausschnitts aus Figur 3;
- Figur 5:: Seitenansicht einer Ausführungsform einer Düsenaufnahme mit eingebauter Düse und montierter Prallplatte.
- Figur 6:: Seitenansicht der Ausführungsform nach Figur 5.

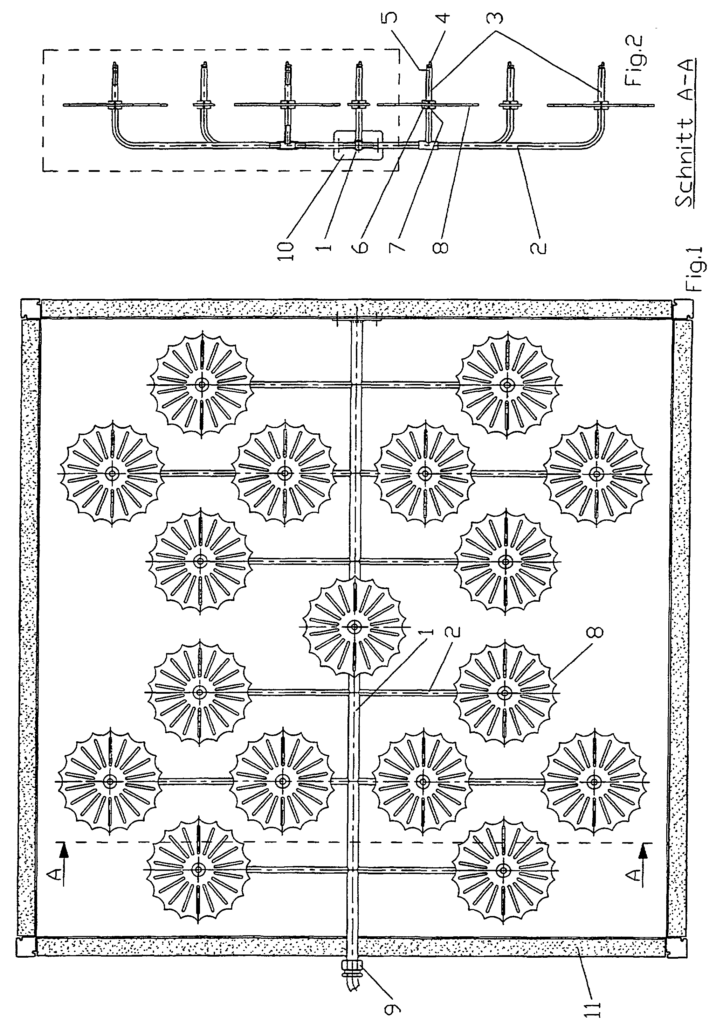

Die in Figur 1 dargestellte Befeuchtungseinrichtung, die im Querschnitt eines Luftstromkanals 11 angeordnet ist, besteht aus Hauptzuleitung 1, Düsenzuleitung 2, Düsenaufnahme-Abzweigung 3, Düse 4, Düsenaufnahme 5, Prallplattenhalterung 6, Stellschrauben 7, Prallplatte 8, Pumpenanschluß 9, Befestigungsblech 10 und Rahmen des Luftstromkanals 11. Deutlich erkennbar ist der außen umlaufende Rahmen 11, indem in seinem Querschnitt zentrisch angeordnet die Hauptzuleitung 1 mit ihren quer abgehenden Düsenzuleitungen 2 angeordnet ist. An den Düsenzuleitungen 2 sind etwa rechtwinklig abgebogene Düsenaufnahme-Abzweigungen 3 angeordnet, auf welchen etwa konzentrisch über eine Prallplattenhalterung 6 die Prallplatten 8 in Luftstromrichtung stromabwärts in Bezug zu den Düsenzuleitungen 2 angebracht sind. In Luftstromrichtung weiterhin stromabwärts gesehen ist die der jeweiligen Prallplatte 8 zugeordnete Düse 4 an der Düsenaufnahme 5 montiert. Die Figur 1 zeigt also eine mögliche Ausführungsform der vorliegenden Erfindung, wie sie in einem Querschnitt eines Luftstromkanals angeordnet ist.

Die Figur 2 zeigt eine Schnittdarstellung der Abbildung 1, in der jedoch der Rahmen des Luftstromkanals 11 nicht gezeichnet ist. Es ist lediglich die Anordnung der Düsenzuleitungen 2, der Düsenaufnahme-Abzweigung 3, die Düse 4 sowie die Prallplattenhalterung 6, die Stellschrauben 7 und die damit befestigte Prallplatte 8 erkennbar. Weiters ist in der Mitte der Figur 2 die etwa rechteckförmige Grundfläche des Befestigungsbleches 10 der Hauptzuleitung 1 erkennbar. Die Hauptzuleitung 1 ist exakt in der Mitte der Figur 2 als Kreis dargestellt.

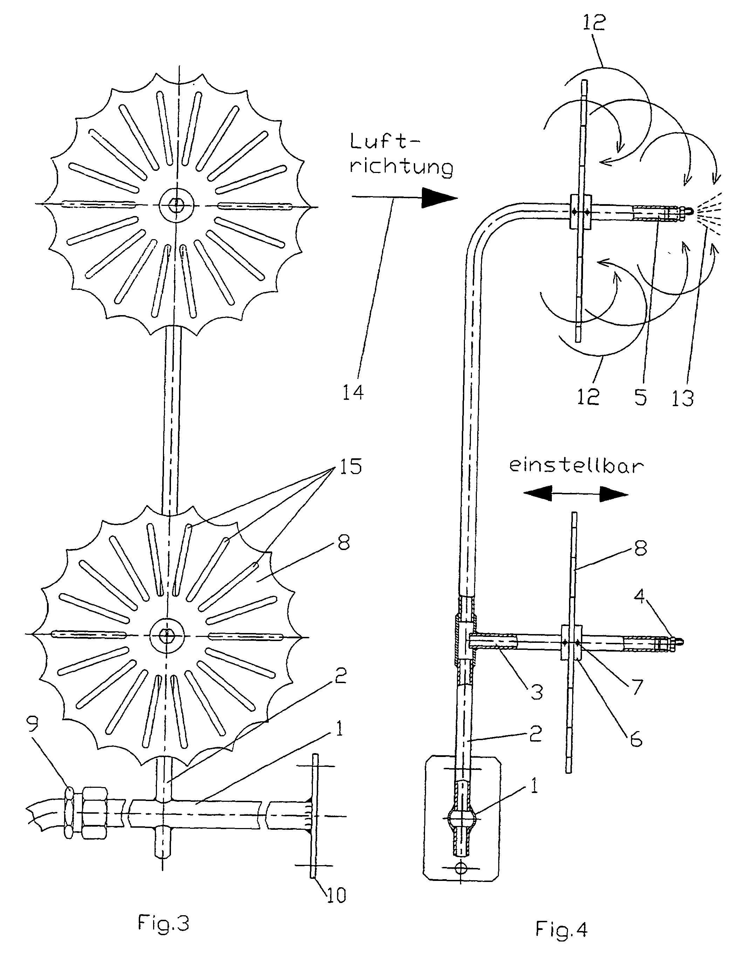

Figur 3 zeigt exemplarisch den Anschluß der Hauptzuleitung 1 mit dem Pumpenanschluß 9 sowie den Abschluß der Hauptzuleitung 1 mit dem Befestigungsblech 10 mit dem die Hauptzuleitung 1 und die daran befestigten Teile der Befeuchtungseinrichtung an der Innenwand des Luftstromkanals 11 befestigt sind. Weiters ist die Abzweigung zwischen Hauptzuleitung 1 und Düsenzuleitung 2 mit den an den Düsenaufnahme-Abzweigungen 3 befestigten Aufprallplatten 8 dargestellt. In den Prallplatten 8 sind strahlenförmige, radial verlaufende und im Winkel zueinander versetzt angeordnete längliche Nuten als Luftdurchlaß-Öffnungen 15 eingebracht, die den unerwünschten Effekt der Rückströmung der Luft bis an die Prallplatte 8 hin unterbindet.

In Figur 4 ist die Befestigung der Prallplatten 8 in der Form der Prallplattenhalterung 6 mit den beiden Stellschrauben 7 dargestellt. Die Prallplatten 8 sind hierbei etwa konzentrisch auf der Düsenaufnahme-Abzweigung 3 angeordnet. Weiters ist dargestellt, wie die Düse 4 mit der Düsenaufnahme-Abzweigung 3 an der Düsenzuleitung angeordnet ist. Dabei ist erkennbar, daß der Abstand zwischen der fest positionierten Düse 4 und der Prallplatte 8 über die Stellschrauben 7 variabel einstellbar ist.

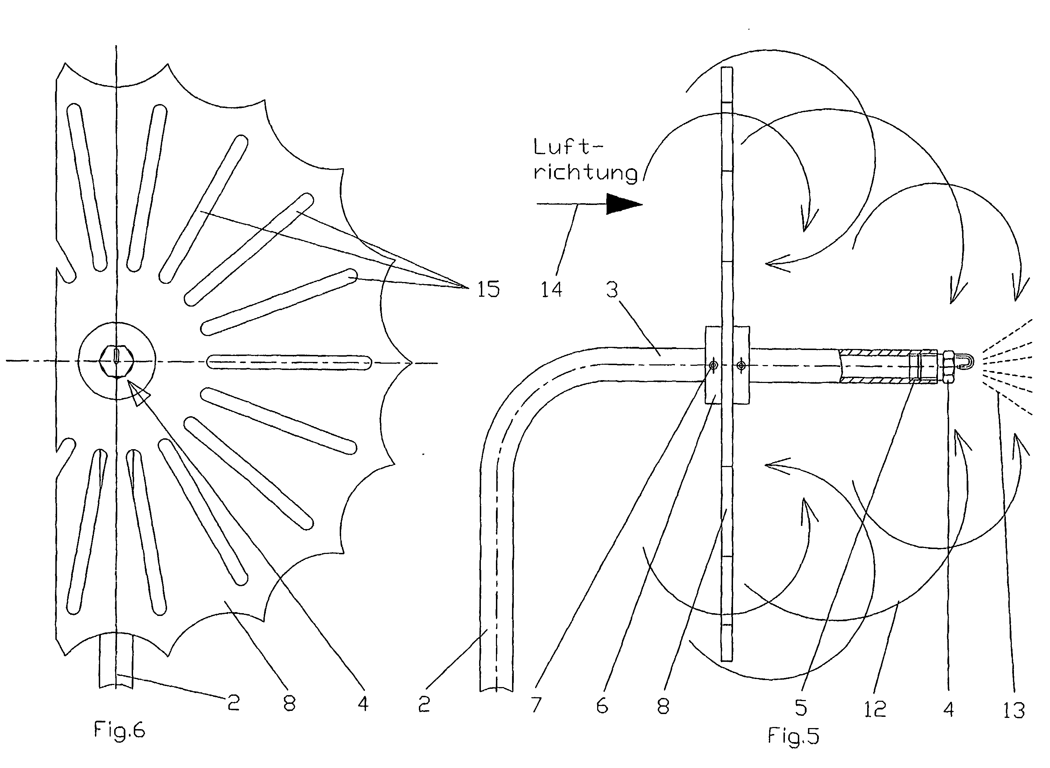

Figur 5 zeigt einen Teilausschnitt der vorliegenden Erfindung, bei der die Düse 4 über eine Düsenaufnahme 5 in der Düsenaufnahme-Abzweigung 3 angeordnet ist, und zwar direkt im Verwirbelungsbereich hinter der Prallplatte 8.

In Figur 6 ist die Ausführungsform nach Figur 5 in der Seitenansicht, von der Düse 4 aus gesehen, dargestellt.

Die Düsenzuleitung 2 ist in Richtung des Luftstroms gesehen vor der Prallplatte 8 angeordnet, wobei an ihrer Auslaßöffnung die Düsenaufnahme-Abzweigung 3 sitzt, in welche die Düse 4 eingebracht ist.

Diese Düse 4 selbst besteht aus einem Grundkörper, welcher als Schraube ausgeführt ist und aus einem Prallkörper (z.B. Rubin), welcher zur Zerstäubung des aus der Düse 4 austretenden Wassers 13 dient und über einen im 180°-Bogen geführten Träger am Grundkörper befestigt ist. Das Wasser 13 tritt also aus der Düse 4 mit Hochdruck aus und trifft auf den Prallkörper der Düse 4 auf, so daß das Wasser 13 fein zerstäubt wird.

Das derart von der Düse zerstäubte Wasser 13 wird von den Luftwirbeln 12 erfaßt, und befeuchtet somit die durchströmende Luft im Luftstromkanal. Die Düse 4 ist eine Spezialanfertigung, an deren Öffnung zur Kalibrierung des zerstäubten Wasserstrahls ein Rubin eingesetzt ist. Durch diese Kalibrierung in Zusammenwirkung mit der variablen Einstellung des Abstands zwischen Düse 4 und Prallplatte 8 ist es möglich, eine optimale Befeuchtung der durchströmenden Luft des Luftstromkanals zu erreichen.

Es besteht also der Vorteil, daß durch die Kalibriermöglichkeit der Düse und die variable Einstellbarkeit des Abstands zwischen Düse und Prallplatte der Grad der Luftbefeuchtung den jeweiligen Druckverhältnissen der durchströmenden Luft und des zugeführten Wassers angepaßt werden kann. Durch diese Vorrichtung ist es möglich, mit einfachen Handgriffen, die Befeuchtungseinrichtung entsprechend den Verhältnissen anzupassen.

Es versteht sich von selbst, daß die Anordnung der Düsen und Prallplatten gleichmäßig ausgeführt wird. Die in den Zeichnungen dargestellten Anordnungen zeigen nur eine mögliche Ausführungsform der vorliegenden Erfindung.

Vorteile der dargestellten Erfindung sind, niedrige Herstellungskosten, geringe Werkzeugkosten und durch die einfache Anordnung, eine freie Wahl des zu verwendeten Materials. Somit ist es möglich, auch ohne Einsatz von brandfähigem Material die Konstruktion durchzuführen. Dies hat den Vorteil, daß bei Einsatz in Klimaanlagen gesundheitsschädliche Emissionen vermieden werden können.

Man erhält also den gleichen, oder sogar einen verbesserten Befeuchtungsgrad der Luft mit einer wesentlich kostengünstigeren Anordnung, wobei insbesondere durch die kostengünstigen Prallscheiben ein wesentlich wirtschaftlicher Herstellungsprozeß erreicht wird. Außerdem ist die Herstellung des Verteilerrechens kostengünstiger als die Anwendung biegsamer Wasserzuführungsschläuche, die alle über entsprechende Hochdruckverschraubungen mit den Düsen verschraubt werden müssen, wie es für den Anwendungsbereich zwischen 20 und 120 Bar für die Wasserzuführung notwendig ist.

### Zeichnungslegende

- 1.: Hauptzuleitung
- 2.: Düsenzuleitung
- 3.: Düsenaufnahme-Abzweigung
- 4.: Düse
- 5.: Düsenaufnahme
- 6.: Prallplattenhalterung
- 7.: Stellschrauben
- 8.: Prallplatte
- 9.: Pumpenanschluß
- 10.: Befestigungsblech
- 11.: Luftstromkanal
- 12.: Luftwirbel
- 13.: zerstäubtes Wasser
- 14.: Strömungsrichtung
- 15.: Luftdurchlaß-Öffnung

## Patentansprüche

1. Luftbefeuchtungsanlage zur Befeuchtung von Luft in einem Luftströmungskanal, wobei mehrere Düsen (4) für die Wasserzerstäubung und mehrere Prallplatten (8) gleichmäßig über den Querschnitt des Luftströmungskanals angeordnet sind, und die Düsen (4) das Wasser (13) mit der Strömungsrichtung der Luft (14) aussprühen, **dadurch gekennzeichnet, daß** mindestens eine Düse (4) jeweils einer Prallplatte (8) zugeordnet ist, wobei die Düsen (4) stromabwärts zu den Prallplatten (8) und im wesentlichen radial einwärts im Bezug auf die Mantelfläche der Prallplatte (8) sich befinden, also im Windschatten der Prallplatte (8).

2. Luftbefeuchtungsanlage nach Anspruch 1, **dadurch gekennzeichnet, daß** die Düsen (4) im betriebsbedingten Turbulenz-Bereich der Luftwirbel (12) stromabwärts der Prallplatten (8) angeordnet sind.

3. Luftbefeuchtungsanlage nach einem der Ansprüche 1 oder 2, **dadurch gekennzeichnet, daß** die Düsen (4) im wesentlichen axial und zentral zur jeweiligen zugeordneten Prallplatte (8) angeordnet sind.

4. Luftbefeuchtungsanlage nach einem der Ansprüche 1 bis 3, **dadurch gekennzeichnet, daß** mindestens die Düsen (4) an der Düsenaufnahme-Abzweigung (3) angeordnet sind.

5. Luftbefeuchtungsanlage nach einem der Ansprüche 1 bis 4, **dadurch gekennzeichnet, daß** die Prallplatten (8) mittels Prallplattenhalterungen (6) an den Düsenaufnahme-Abzweigungen (3) angeordnet sind.

6. Luftbefeuchtungsanlage nach einem der Ansprüche 1 bis 5, **dadurch gekennzeichnet, daß** der Abstand zwischen der Düse (4) und der Prallplatte (8) entsprechend den Betriebsverhältnissen variabel einstellbar ist.

7. Luftbefeuchtungsanlage nach Anspruch 6, **dadurch gekennzeichnet, daß** der Abstand zwischen der Düse (4) und der Prallplatte (8) mittels Stellschrauben (7) einstellbar ist.

8. Luftbefeuchtungsanlage nach einem der Ansprüche 1 bis 7, **dadurch gekennzeichnet, daß** die Prallplatten (8) an ihren Mantelflächen scharfkantig ausgebildet sind.

9. Luftbefeuchtungsanlage nach einem der Ansprüche 1 bis 8, **dadurch gekennzeichnet, daß** die Prallplatten (8) Luftdurchlaß-Öffnungen (15) aufweisen, welche Durchbrüche durch die Stirnseiten der Prallplatten (8) bilden.

10. Luftbefeuchtungsanlage nach Anspruch 9, **dadurch gekennzeichnet, daß** die Luftdurchlaß-Öffnungen (15) strahlenförmig, radial verlaufend, und im Winkel zueinander versetzt durch die Stirnseiten der Prallplatten (8) eingebracht sind.

## Claims

1. Humidifier for humidifying air in an air duct, wherein a plurality of water atomization nozzles (4) and a plurality of baffles (8) are evenly disposed over the cross-section of the air duct and the nozzles (4) spray water (13) in the direction of the airflow (14), **characterized in that** at least one nozzle (4) is assigned to each baffle (8), the nozzles (4) being located downstream of the baffles (8) and essentially radially inwards with respect to the circumferential surface of the baffle (8), i. e. in the wind shadow of the baffle (8).

2. Humidifier according to Claim 1, **characterized in that** the nozzles (4) are arranged in the zone of turbulence caused by the vortices (12) occurring in operation downstream of the baffles (8).

3. Humidifier according to Claim 1 or Claim 2, **characterized in that** the nozzles (4) are arranged essentially axially and centrally with respect to their respective baffle (8).

4. Humidifier according to any one of Claims 1 to 3, **characterized in that** at least the nozzles (4) are arranged on the nozzle-holder branch (3).

5. Humidifier according to any one of Claims 1 to 4, **characterized in that** the baffles (8) are arranged on the nozzle-holder branches (3) by means of baffle mountings (6).

6. Humidifier according to any one of Claims 1 to 5, **characterized in that** the distance between the nozzle (4) and the baffle (8) is adjustable to suit operating conditions.

7. Humidifier according to Claim 6, **characterized in that** the distance between the nozzle (4) and the baffle (8) is adjustable by means of adjusting screws (7).

8. Humidifier according to any one of Claims 1 to 7, **characterized in that** the baffles (8) are configured with sharp edges at their circumferential surfaces.

9. Humidifier according to any one of Claims 1 to 8, **characterized in that** the baffles (8) have air passage openings (15) forming breaches through the faces of the baffles (8).

10. Humidifier according to Claim 9, **characterized in that** the air passage openings (15) are made through the faces of the baffles (8) in a radiating pattern and extend radially and at an angle to each other.

## Revendications

1. Installation d'humidification de l'air pour humidifier l'air dans un conduit d'écoulement d'air, dans laquelle plusieurs vaporisateurs (4) destinés à vaporiser de l'eau et plusieurs plaques de rebondissement (8) sont disposées régulièrement sur la section transversale du conduit d'écoulement d'air, et les vaporisateurs (4) diffusent l'eau (13) dans le sens d'écoulement de l'air (14), **caractérisée en ce qu'**au moins un vaporisateur (4) est associé à chaque plaque de rebondissement (8), les vaporisateurs (4) étant situés en aval des plaques de rebondissement (8) et sensiblement radialement vers l'intérieur par rapport à la surface latérale desdites plaques (8), et donc côté sous le vent par rapport à celles-ci.

2. Installation d'humidification de l'air selon la revendication 1, **caractérisée en ce que** les vaporisateurs (4) sont disposés dans la zone de turbulence des tourbillons d'air (12), due au fonctionnement, qui est située en aval des plaques de rebondissement (8).

3. Installation d'humidification de l'air selon la revendication 1 ou 2, **caractérisée en ce que** les vaporisateurs (4) sont disposés sensiblement axialement et de manière centrée par rapport à la plaque de rebondissement (8) correspondante.

4. Installation d'humidification de l'air selon l'une des revendications 1 à 3, **caractérisée en ce que** les vaporisateurs (4), au moins, sont disposés sur l'embranchement de porte-vaporisateur (3).

5. Installation d'humidification de l'air selon l'une des revendications 1 à 4, **caractérisée en ce que** les plaques de rebondissement (8) sont disposées sur les embranchements de porte-vaporisateurs (3) à l'aide de fixations de plaques de rebondissement (6).

6. Installation d'humidification de l'air selon l'une des revendications 1 à 5, **caractérisée en ce que** l'écartement entre le vaporisateur (4) et la plaque de rebondissement (8) est réglable de manière variable en fonction des conditions de fonctionnement.

7. Installation d'humidification de l'air selon la revendication 6, **caractérisée en ce que** l'écartement entre le vaporisateur (4) et la plaque de rebondissement (8) est réglable à l'aide de vis de réglage (7).

8. Installation d'humidification de l'air selon l'une des revendications 1 à 7, **caractérisée en ce que** les plaques de rebondissement (8) ont des arêtes vives sur leur surface latérale.

9. Installation d'humidification de l'air selon l'une des revendications 1 à 8, **caractérisée en ce que** les plaques de rebondissement (8) présentent des passages d'air (15) qui forment des ouvertures dans les faces frontales desdites plaques de rebondissement (8).

10. Installation d'humidification de l'air selon la revendication 9, **caractérisée en ce que** les passages d'air (15) sont prévus en étoile, radialement, et sont décalés angulairement les uns par rapport aux autres, dans les faces frontales des plaques de rebondissement (8).
